# EUROPEAN PATENT APPLICATION

(11) **EP 4 837 752 A1**
(43) Date of publication of application: **11.11.2026**
(21) Application number: 25175028.7
(22) Date of filing: 08.05.2025
(51) Int. Cl.: B60C 3/04, B29D 30/06

(54) **PNEUMATIC TYRE, MOULD FOR MANUFACTURING A PNEUMATIC TYRE, AND METHOD OF MANUFACTURING A PNEUMATIC TYRE**

(71) Applicant: Nokian Renkaat Oyj, 37101 Nokia (FI)
(72) Inventor: LEPISTÖ, Samu, 37101 Nokia (FI); SGRO, Stefano, 37101 Nokia (FI); JUNTTILA, Joonas, 37101 Nokia (FI); RÖYTIÖ, Jarno, 37101 Nokia (FI); DAMM, Dietmar, 80538 München (DE)
(74) Representative: Berggren Oy

(57) **Abstract**

In the pneumatic radial tyre (10) for a passenger car, the tyre's (10) tread width (TW), maximum diameter (MD), maximum section width (MSW), and maximum section width diameter (MSWD) are within the ranges defined by specific formulas when the tyre (10) is mounted on a measuring rim (30) specified for the tyre size in question in the ETRTO standard for passenger car tyres and pressurized according to said standard

## Description

### Technical field of the invention

The invention concerns a pneumatic radial tyre for a passenger car, as defined in claim 1. The invention further concerns a mould for manufacturing a pneumatic radial tyre and a method of manufacturing a pneumatic radial tyre.

### Background of the invention

Passenger cars, light commercial vehicles, SUVs and other similar vehicles are usually provided with pneumatic radial tyres. As the tyres provide the only contact points between the vehicle and the ground, the properties of the tyres play a crucial role in the performance, handling properties and safety of vehicles. The tyres must allow safe and comfortable driving in various conditions and situations. For instance, the tyres must function both in dry and wet weather, in various temperatures and on different surfaces and at different speeds. Improving of a single property of a tyre could be relatively easy, but improving of the overall performance of a tyre is very challenging due to many conflicting requirements.

### Summary of the invention

An object of the invention is to provide an improved pneumatic radial tyre for a passenger car. Another object of the invention is to provide an improved mould for manufacturing a pneumatic radial tyre by vulcanizing and forming in the mould. A still further object of the invention is to provide an improved method of manufacturing a pneumatic radial tyre using a mould.

A tyre has a tread width (TW), maximum diameter (MD), maximum section width (MSW), and maximum section width diameter (MSWD). When the tyre according to the invention is mounted on a measuring rim specified for the tyre size in question in the ETRTO standard for passenger car tyres and pressurized according to said standard, the above-mentioned dimensions are within the ranges defined by the following Formulas I-IV:
- $TW = \left(1.075-0.005\times AR\right) {s}^{k}$ (Formula i)
- ${D}_{max in service} - 4.0 mm \leq MD \leq {D}_{max in service} + 12.0 mm$ (Formula ii)
- $\begin{matrix}a \times {\left(MD-RimD\right)}^{2} + b \times \left(MD-RimD\right) + {c}_{min} \leq MSW - \\ {RimW}_{ETRTO} \leq a \times {\left(MD-RimD\right)}^{2} + b \times \left(MD-RimD\right) + {c}_{max}\end{matrix}$ (Formula iii)
- $1.8967 \leq \frac{MD - RimD}{MSWD - RimD} \leq 2.1200$ (Formula iv) where

- *AR* is the aspect ratio of the tyre,
- s is the design section width of the tyre size in question defined in said ETRTO standard for a tyre mounted on said measuring rim,
- $0.9930 \leq k \leq 1.0020 ,$
- *D_{max in service}* is the maximum diameter in service specified for the tyre size in question in said ETRTO standard without an increase allowed for M+S tyres,
- *RimD* is the rim diameter specified in said ETRTO standard for the tyre size in question,
- *RimW_{ETRTO}* is the rim width of said measuring rim,
- $a = - 1.3 \times {10}^{- 3} ,$
- $b = 0.9054 ,$
- ${c}_{min} = - 78.487 ,$ and
- ${c}_{max} = - 98.487 .$

A mould has the following inner dimensions: tread area width (TW_{mould}), maximum diameter (MD_{mould}), maximum section width (MSW_{mould}), and maximum section width diameter (MSWD_{mould}). In the mould according to the invention, the above-mentioned dimensions are within the ranges defined by the following Formulas VI-X:
- ${TW}_{mould} = \left(1.075-0.005\times AR\right) \times {s}^{k}$ (Formula vi)
- ${D}_{max in service} - 4.0 mm \leq {MD}_{mould} \leq {D}_{max in service} + 10.0 mm$ (Formula vii)
- $\begin{matrix}d \times {\left({MD}_{mould}-RimD\right)}^{2} + e \times \left({MD}_{mould}-RimD\right) + {f}_{min} \leq \\ {MSWD}_{mould} - CRW \leq d \times {\left({MD}_{mould}-RimD\right)}^{2} + e \times \left(\begin{matrix}{MD}_{mould} - \\ RimD\end{matrix}\right) + {f}_{max}\end{matrix}$ (Formula viii)
- $1.9207 \leq \frac{{MD}_{mould} - RimD}{{MSWD}_{mould} - RimD} \leq 2.0802$ (Formula ix)
where:
- *AR* is the aspect ratio of the tyre,
- s is the design section width of the tyre size in question defined in the ETRTO standard for passenger car tyres for a tyre mounted on a measuring rim specified for the tyre size in question,
- $0.9924 \leq k \leq 1.0020 ,$
- D_{max in service} is the maximum diameter in service specified for the tyre size in question in said ETRTO standard without an increase allowed for M+S tyres,
- *CRW* is the width of the curing rim of the mould,
- *RimD* is the rim diameter specified in said ETRTO standard for the tyre size in question,
- $d = - 1.1 \times {10}^{- 3} ,$
- $e = 0.7537 ,$
- ${f}_{min} = - 80.844 ,$ and
- ${f}_{max} = - 65.844 .$

In the method according to the invention the mould defined above is used. The method comprises the steps of assembling tyre components to form a pre-formed tyre and vulcanizing the preformed tyre in a curing press comprising said mould.

The mould according to the invention and the method according to the invention can be used for manufacturing the tyre according to the invention. The tyre according to the invention has good dry handling and wet handling performance. In case of winter tyres and all-season tyres, the tyre according to invention has been proved to also have good snow handling performance.

According to an embodiment of the invention, the Free-state Beads Width (FsBW), i.e. the distance between the outer surfaces of the beads of the tyre when the tyre is in a free state not mounted on a rim, is within the range defined by the following Formula V:
- ${RimW}_{ETRTO} - 12.0 mm \leq FsBW \leq {RimW}_{ETRTO} + 4.0 mm$ (Formula v)

According to an embodiment of the invention, the tyre is configured to be mounted on a rim having a nominal diameter in the range of 13 to 24 inches. The tyre may be configured to be mounted on a rim having a nominal diameter in the range of 15 to 22 inches or in the range of 16 to 19 inches.

According to an embodiment of the invention, the tread width of the tyre is 205 to 235 mm.

According to an embodiment of the invention, the aspect ratio of the tyre is 40 to 60.

According to an embodiment of the invention, the curing rim width (CRW) of the mould is within the range defined by the following Formula X:
- $RimW - 14.7 mm \leq CRW \leq RimW - 10.7 mm$ (Formula x)
where:
- *RimW* is the rim width specified for the tyre size in question in said ETRTO standard.

### Brief description of the drawings

Embodiments of the invention are described below in more detail with reference to the accompanying drawings, in which
Fig. 1 shows an example of a radial tyre,
Fig. 2 shows a cross-sectional view of part of a tyre mounted on a rim,
Fig. 3 shows a cross-sectional view of part of a tyre in a free state,
Fig. 4 shows an example of a rim profile,
Fig. 5 shows a partially cut view of a tyre,
Fig. 6 shows a cross-sectional view of components of a radial tyre,
Fig. 7 shows an enlarged view of part of the tyre of figure 6,
Fig. 8 shows a cross-sectional view of a mould for manufacturing a tyre, and
Fig. 9 shows a partially cut perspective view of a mould for manufacturing a tyre.

### Detailed description of embodiments of the invention

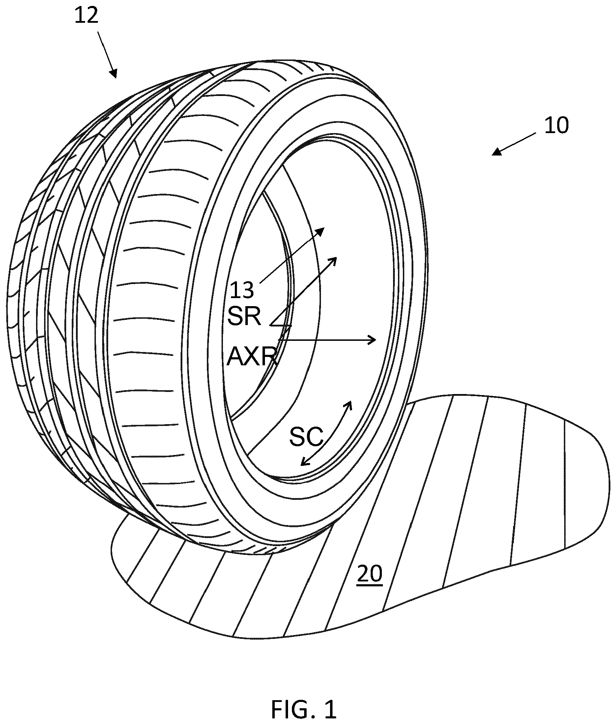

Figure 1 shows an example of a radial tyre 10. The tyre 10 is a pneumatic tyre for a passenger car or a SUV, although the tyre 10 could also be used in other vehicles. The tyre 10 is configured to be mounted on a rim having a nominal diameter in the range of 13 to 24 inches or in the range of 15 to 22 inches.

The tyre 10 is configured to be rotatable around an axis of rotation AXR. Arrow SR in figure 1 denotes the radial direction of the tyre 10 and arrow SC denotes the circumferential direction of the tyre 10.

The tyre 10 comprises a tread 12, which is configured to be in contact with a surface 20, such as a road surface, during the normal use of the tyre 10. The tread 12 comprises a tread pattern, which comprises a plurality of tread blocks. The tyre 10 has an inner surface 13, which faces inwards and is therefore not visible during the normal use of the tyre 10 when the tyre 10 is mounted on a rim.

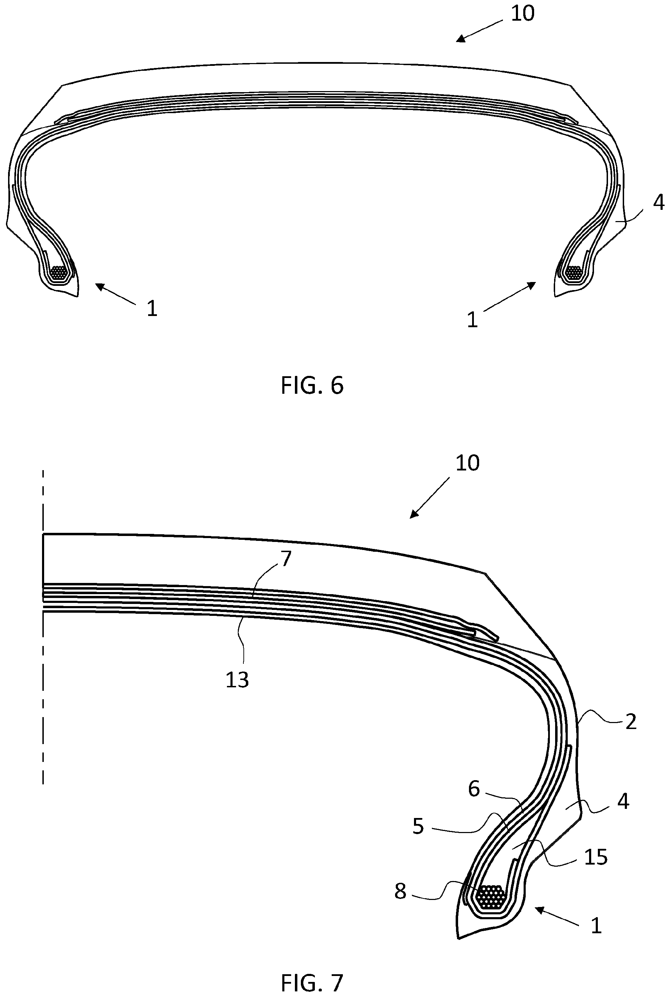

Figure 6 shows as a cross-sectional view an example of typical components of a radial tyre 10. Figure 7 shows an enlarged view of part of the tyre 10 to better illustrate the components of the tyre 10. It should be noted that different tyres 10 may comprise different components. A radial tyre 10 can thus comprise even other components than those shown in the figures, and/or not all tyres 10 comprise all the components described below. The tread 12 of the tyre 10 is not shown in figures 6 and 7.

The tyre 10 comprises a bead 1 on each side of the tyre 10. The term "bead" refers to the area that is configured to contact a rim when the tyre 10 is mounted on the rim. Each bead 1 extends in the circumferential direction over a whole circle. The bead 1 has a toe that faces in the lateral direction of the tyre 10 towards an imaginary centre plane of the tyre 10 and a heel that faces laterally outwards from the centre plane of the tyre 10. Many components of the tyre 10 extend to one or both of the bead regions of the tyre 10.

The tyre 10 typically comprises at least one reinforcing belt, i.e., a circumferential layer 7, which is arranged between the inner surface 13 of the tyre 10 and the tread 12 of the tyre 10. In the example of figures 6 and 7, the tyre 10 comprises two belts 7. The belts 7 can be made of the same material or of different materials.

The circumferential belts 7 can comprise metal. The circumferential belts 7 may comprise steel, or they may consist of steel. The circumferential belts 7 may be wire-like structures arranged inside the tyre 10. At least one of the circumferential belts 7 may comprise a steel mesh. In addition, or alternatively, the circumferential belts 7 may comprise fibrous material. The fibrous material of a circumferential belt 7 may comprise at least one of cotton, rayon, polyamide (Nylon), polyester, polyethylene terephthalate, and poly-paraphenylene terephthalamide (Kevlar). The tyre 10 could comprise, for instance, two steel belts and one or more belts made of a fibrous material and arranged radially outwards from the steel belts.

The body of the tyre 10 comprises at least one carcass ply 5, 6. In the example of figures 6 and 7, the tyre 10 comprises two carcass plies 5, 6. The carcass plies 5, 6 are material layers, typically textile layers. Each carcass ply 5, 6 extends from a first bead region of the tyre 10 to a second bead region on the other side of the tyre 10. Each ply fabric can be made of e.g. polyester. The plies can be coated with rubber to seal the tyre and to bond the layers with each other.

The carcass ply/plies 5, 6 may comprise fibrous material. The fibrous material of the carcass ply 5, 6 can comprise
- cotton, and/or
- rayon, and/or
- polyamide (Nylon), and/or
- polyester, and/or
- polyethylene terephthalate, and/or
- Poly-paraphenylene terephthalamide (Kevlar).

The tyre 10 further comprises an outer sidewall 2. The outer sidewall 2 of the tyre 10 can be used to protect the side of the tyre 10 e.g. from the road. The outer visible tyre sidewalls 2 can be of a rubber composition.

The tyre 10 may further comprise an inner liner 13, which inner liner 13 of the tyre 10 is typically an airtight layer of rubber.

Each bead 1 of the tyre 10 is configured to allow the tyre 10 to be mounted on a rim. The bead 1 comprises a rubber composition that forms a mounting surface of the tyre 10. The bead 1 further comprises a bead core (bead wire) 8. The bead 1 may further comprise an apex (bead filler) 15. The bead core 8 is formed by a wire bundle. The bead core 8 can be constructed by wrapping a single strand of rubber-coated bead wire into a bundle. The bead core 8 could comprise more than one strands. The bead core 8 can have a substantially circular cross-sectional shape or some other shape, such as a drop shape or a hexagonal shape. The apex 15 may be a filler of elastomeric material.

The carcass plies 5, 6 extend from one side of the tyre 10 to the other side and the carcass plies 5, 6 are turned around the bead core 8 and at least part of the apex to the external side of the tyre 10. In the examples of the figures, the outer carcass ply 6 extends farther from the bead core 8.

The tyre may comprise a rim protector 4, as shown in figures 6 and 7. The term "rim protector" refers to a protrusion located radially outwards from a seam between the bead region 1 and the sidewall 2 of the tyre 10. The rim protector 4 protects the rim 30 from external impacts.

To manufacture a tyre, a pre-formed apex 15 can be connected to the bead core 8 with a machine. Thus, a bead assembly can be preassembled from the bead core 8 and the apex 15. The apex 15 can be, for example, an extruded strip. The tyre 10 can be pre-formed, and the assembly can be combined to a tyre carcass. Finally, the tyre 10 can be vulcanized, e.g., in a curing press.

A method for manufacturing a pneumatic tyre can thus comprise the following steps:
- connecting a preformed apex to a bead core, thereby forming an assembly comprising the bead core and the apex,
- preforming a tyre comprising said assembly, and
- vulcanizing the preformed tyre, thereby obtaining the tyre.

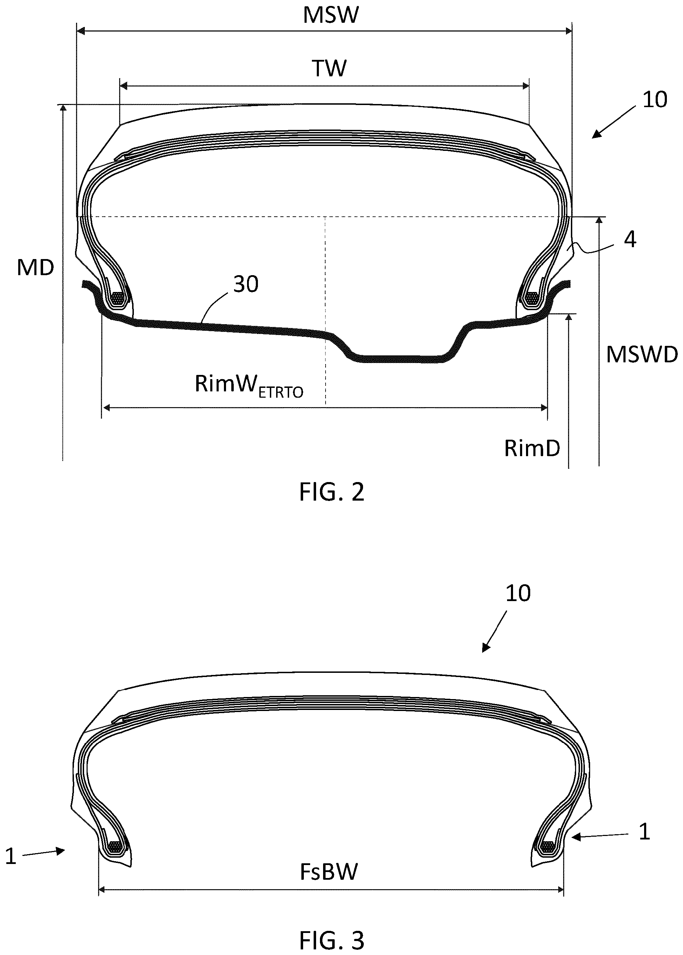

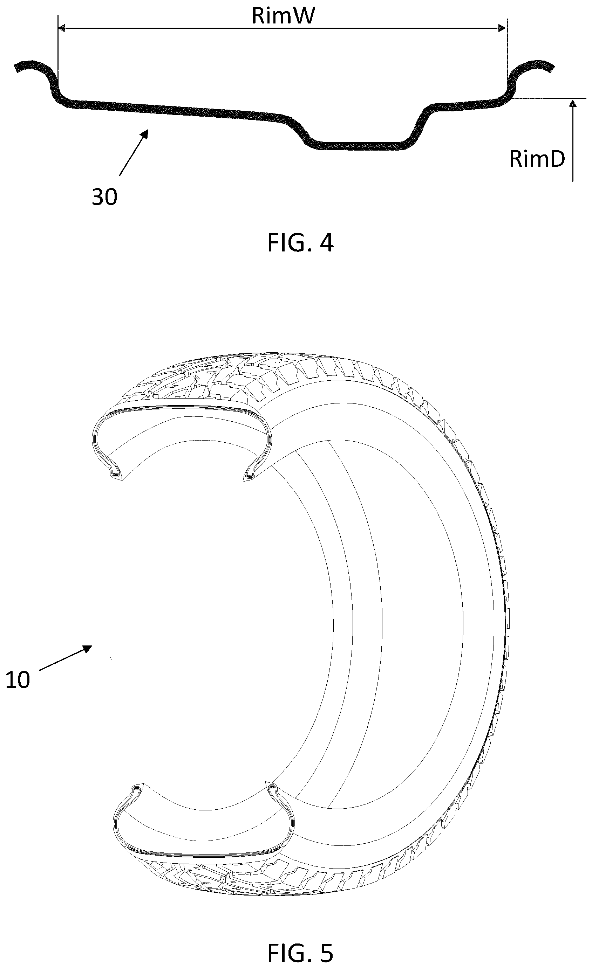

The tyre 10 is configured to be mounted on a rim 30. Each rim 30 has a certain rim profile to support the tyre 10. An example of a rim profile is shown in figure 4. To allow the tyres of different manufacturers to be mounted on different rims, both the tyres and the rims have been standardised. Passenger car tyres have been standardised for example by an ETRTO standard for passenger cars. The acronym ETRTO refers to the European Tyre & Rim Technical Organisation. Each tyre has a nominal size expressed as a nominal section width; aspect ratio, i.e. the relationship between the tyre's sidewall height and the tyre's width; and the nominal size of the rim. Each tyre must fulfil some requirements regarding the size. Different dimensions of the tyre thus need to be within a certain range, below a certain value or above a certain value. Compliance with the standard is determined by mounting the tyre on a measuring rim specified in the standard and by inflating the tyre as specified in the standard. The inflation pressure is 180 kPa for Standard Load Tyres and 220 kPa for Extra Load or Reinforced tyres. The measuring rim has a width that is referred to as Rim-W_{ETRTO} in figure 2. The width means here the inner width of the measuring rim as defined in the standard. The rim 30 also has a rim diameter RimD. The rim diameter is measured from a position where the heel of the tyre 10 contacts the rim 30.

Although the dimensions of a standardised tyre need to be within certain ranges, even a standardised tyre can be dimensioned in various different ways. A tyre has many dimensions that affect the performance of the tyre. Relevant dimensions of a tyre that is mounted on a measuring rim 30 and inflated according to the standard are shown in figure 2.

In figure 2, MSW refers to the maximum section width of the tyre 10. As the name suggests, the maximum section width MSW of the tyre 10 is the maximum width of the tyre 10. However, if the tyre 10 is provided with a rim protector 4, as in the example of figure 2, the rim protector area is excluded. The term "rim protector" refers to a protrusion located radially outwards from a seam between the bead region 1 and the sidewall 2 of the tyre 10. The rim protector 4 protects the rim 30 from external impacts. In a tyre 10 comprising a rim protector 4, the maximum section width means the maximum width of the tyre 10 in the area that is located radially outwards from the rim protector 4.

MSWD refers to the maximum section width diameter of the tyre 10. Said diameter is the diameter of a circle where the maximum section width of the tyre 10 is located.

MD refers to the maximum diameter of the tyre 10. The maximum diameter is thus the greatest outer diameter of the tyre 10 mounted on the measuring rim 30.

TW refers to the tread width of the tyre 10 mounted on the measuring rim 30.

Figure 4 shows an example of a profile of a rim 30. The dimensions of rims are standardised for example by the standards of the European Tyre & Rim Technical Organisation (ETRTO). The rims of passenger car tyres are covered by a standard concerning rims for passenger cars, light commercial vehicles and trailers. Many dimensions of the rims are specified in the standard as minimum and/or maximum dimensions. One dimension specified in the standard is the rim diameter, which is denoted in figure 4 by RimD. Each rim has a nominal size expressed in inches. The nominal sizes vary from 10 to 30 inches. For each nominal size, there is a specific rim diameter RimD. The rim diameter RimD is measured from a position where the heel of the tyre 10 contacts the rim 30. As an example, the rim diameter RimD of a common wheel size 17 inches is 436.6 mm.

The inventors of the present application have found out that when the tyre dimensions MSW, MSWD, MD and TW referred to above fall within specific ranges as defined below, the performance of the tyre is improved. According to the invention, the dimensions of the tyre 10 are as follows, when the tyre 10 is mounted on the measuring rim: $TW = \left(1.075-0.005\times AR\right) {s}^{k}$ (Formula i) ${D}_{max in service} - 4.0 mm \leq MD \leq {D}_{max in service} + 12.0 mm$ (Formula ii) $\begin{matrix}a \times {\left(MD-RimD\right)}^{2} + B \times \left(MD-RimD\right) + {c}_{min} \leq MSW - {RimW}_{ETRTO} \leq a \times \\ {\left(MD-RimD\right)}^{2} + b \times \left(MD-RimD\right) + {c}_{max}\end{matrix}$ (Formula iii) $1.8967 \leq \frac{MD - RimD}{MSWD - RimD} \leq 2.1200$ (Formula iv)

In the formulas above the dimensions are expressed in millimetres and
- *AR* is the aspect ratio of the tyre,
- s is the design section width of the tyre size in question defined in said ETRTO standard for a tyre mounted on said measuring rim,
- $0.9930 \leq k \leq 1.0020 ,$
- *D_{max in service}* is the maximum diameter in service specified for the tyre size in question in said ETRTO standard without an increase allowed for M+S tyres,
- *RimD* is the rim diameter specified in said ETRTO standard for the tyre size in question,
- *RimW_{ETRTO}* is the rim width of said measuring rim,
- $a = - 1.3 \times {10}^{- 3} ,$
- $b = 0.9054 ,$
- ,${c}_{min} = - 78.487 ,$ and
- ${c}_{max} = - 98.487 .$

In addition to the dimensions of a mounted tyre 10, the tyre's 10 Free-state Beads Width (FsBW), i.e. the distance between the outer surfaces of the beads 1 of the tyre 10 when the tyre 10 is in a free state not mounted on a rim, may be within the range defined by the formula below: ${RimW}_{ETRTO} - 12.0 mm \leq FsBW \leq {RimW}_{ETRTO} + 4.0 mm$ (Formula v)

The tyre 10 can be a winter tyre, an all-season tyre or a summer tyre.

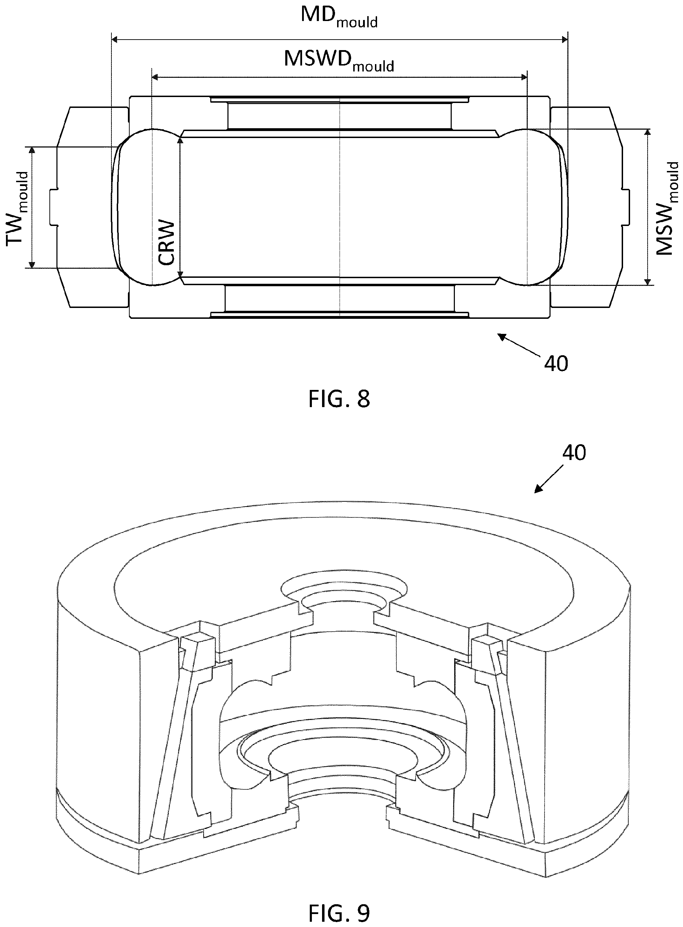

The tyre 10 according to the invention can be manufactured at least by using a mould 40 according to the invention. Figure 8 shows a simplified cross-sectional view of a mould 40 according to an embodiment of the invention for manufacturing a tyre 10, and figure 9 shows a partially cut perspective view of a mould 40 according to an embodiment of the invention for manufacturing a tyre 10.

The mould 40 has inner dimensions TW_{mould}, MD_{mould}, MSW_{mould} and MSWD-_{mould} as shown in figure 8. TW_{mould} refers to the tread area width, MD_{mould} refers to the maximum diameter, MSW_{mould} refers to the maximum section width and MSWD_{mould} refers to the maximum section width diameter. In the mould 40 according to the invention, the dimensions listed above are within the ranges defined by the formulas below: ${TW}_{mould} = \left(1.075-0.005\times AR\right) \times {s}^{k}$ (Formula vi) ${D}_{max in service} - 4.0 mm \leq {MD}_{mould} \leq {D}_{max in service} + 10.0 mm$ (Formula vii) $\begin{matrix}d \times {\left({MD}_{mould}-RimD\right)}^{2} + e \times \left({MD}_{mould}-RimD\right) + {f}_{min} \leq {MSWD}_{mould} - \\ CRW \leq d \times {\left({MD}_{mould}-RimD\right)}^{2} + e \times \left({MD}_{mould}-RimD\right) + {f}_{max}\end{matrix}$ (Formula viii) $1.9207 \leq \frac{{MD}_{mould} - RimD}{{MSWD}_{mould} - RimD} \leq 2.0802$ (Formula ix)

In the formulas above the dimensions are expressed in millimetres and
- *AR* is the aspect ratio of the tyre,
- s is the design section width of the tyre size in question defined in the ETRTO standard for passenger car tyres for a tyre mounted on a measuring rim specified for the tyre size in question,
- $0.9924 \leq k \leq 1.0020 ,$
- D_{max in *service*} is the maximum diameter in service specified for the tyre size in question in said ETRTO standard without an increase allowed for M+S tyres,
- *CRW* is the width of the curing rim,
- *RimD* the rim diameter specified in said ETRTO standard for the tyre size in question,
- $d = - 1.1 \times {10}^{- 3} ,$
- $e = 0.7537 ,$
- ${f}_{min} = - 80.844 ,$ and
- ${f}_{max} = - 65.844 .$

Furthermore, the curing rim width CRW of the mould 40 may be within the range defined below: $RimW - 14.7 mm \leq CRW \leq RimW - 10.7 mm$ (Formula x)

In the formula above, *RimW* is the rim width specified for the tyre size in question in the ETRTO standard.

In the method according to the invention, the tyre 10 is manufactured using a mould 40 described above. The method comprises the steps of assembling tyre components to form a preformed tyre and vulcanizing the preformed tyre 10 in a curing press comprising the mould 10. As the assembling and vulcanizing steps can be performed in a known manner, they are not described in more detail here.

The applicant has tested the performance of tyres according to the invention and compared the performance to prior art tyres.

All-season tyres were tested to determine a dry handling performance index, a wet handling performance index, and a snow handling performance index. In all the tests, the test samples were mounted to a vehicle and tested in the same conditions as the comparative examples.

For determining the dry handling performance of the tyres, the tyres were tested on a dry test course and the steering and cornering characteristics and the stability of the tyres were evaluated by subjective assessment of an experienced test driver.

For determining the wet handling performance of the tyres, the tyres were tested by measuring lap times on a wetted asphalt test course. The tests were performed by an experienced test driver and faster lap times were considered to indicate better grip and controllability.

The snow handling performance was determined in a similar way as the wet handling performance, but by measuring the lap times on a test course with a snow surface.

The test results were scaled such that the prior art tyres used as comparative examples were given an index value of 100 for each of the dry handling, wet handling and snow handling performance.

Table 1 summarises the results of the tests performed on all-season tyres in various tyre sizes. In the indexed results a higher value indicates better handling characteristics.

**Table 1. Performance indices of all-season tyres**

| | Comparative examples | Tyres according to the invention |
|---|---|---|
| Dry handling performance index | 100 | 104 |
| Wet handling performance index | 100 | 102 |
| Snow handling performance index | 100 | 101 |

As shown in table 1, the all-season tyres according to the invention performed better in all conditions.

Similar tests performed on summer tyres have shown that also summer tyres according to the invention perform better than the prior art tyres.

Summer tyres were tested to determine a wet handling performance index, a longitudinal aquaplaning index, and a lateral aquaplaning index. In all the tests, the test samples were mounted to a vehicle and tested in the same conditions as the comparative examples.

For determining the wet handling performance of the tyres, the tyres were tested by measuring lap times on a wetted asphalt test course. The tests were performed by an experienced test driver and faster lap times were considered to indicate better grip and controllability.

In longitudinal aquaplaning tests, a front-wheel drive vehicle was driven into a pool of water at a constant speed and accelerated so that the tyre being tested aquaplanes at a marked location.

The lateral aquaplaning performance of each tyre was determined by monitoring the vehicle's lateral acceleration in relation to speed when driving in a circular path into a water bath. The main subjects of the test were to determine the speed at which the peak lateral acceleration is achieved and to monitor how quickly, and to what degree, it decreases due to aquaplaning while speed is further increased.

The test results were scaled such that the prior art tyres used as comparative examples were given an index value of 100 for each of the wet handling performance, longitudinal aquaplaning and lateral aquaplaning.

Table 2 summarises the results of the tests performed on summer tyres in various tyre sizes. In the indexed results a higher value indicates better handling characteristics.

**Table 2. Performance indices of summer tyres**

| | Comparative examples | Tyres according to the invention |
|---|---|---|
| Wet handling performance index | 100 | 101 |
| Longitudinal aquaplaning index | 100 | 102 |
| Lateral aquaplaning index | 100 | 103 |

As shown in table 2, the summer tyres according to the invention performed better than the comparative examples in all tests.

## Claims

1. A pneumatic radial tyre (10) for a passenger car, wherein the tyre's (10) tread width (TW), maximum diameter (MD), maximum section width (MSW), and maximum section width diameter (MSWD) are within the ranges defined by the following Formulas I-IV when the tyre (10) is mounted on a measuring rim (30) specified for the tyre size in question in the ETRTO standard for passenger car tyres and pressurized according to said standard:
- $TW = \left(1.075-0.005\times AR\right) {s}^{k}$ (Formula i)
- ${D}_{max in service} - 4.0 mm \leq MD \leq {D}_{max in service} + 12.0 mm$ (Formula ii)
- $\begin{matrix}a \times {\left(MD-RimD\right)}^{2} + b \times \left(MD-RimD\right) + {c}_{min} \leq MSW - \\ {RimW}_{ETRTO} \leq a \times {\left(MD-RimD\right)}^{2} + b \times \left(MD-RimD\right) + {c}_{max}\end{matrix}$ (Formula iii)
- $1.8967 \leq \frac{MD - RimD}{MSWD - RimD} \leq 2.1200$ (Formula iv)
where
- *AR* is the aspect ratio of the tyre (10),
- s is the design section width of the tyre size in question defined in said ETRTO standard for a tyre mounted on said measuring rim (30),
- $0.9930 \leq k \leq 1.0020 ,$
- *D_{max in service}* is the maximum diameter in service specified for the tyre size in question in said ETRTO standard without an increase allowed for M+S tyres,
- *RimD* is the rim diameter specified in said ETRTO standard for the tyre size in question,
- *RimW_{ETRTO}* is the rim width of said measuring rim (30),
- $a = - 1.3 \times {10}^{- 3} ,$
- $b = 0.9054 ,$
- ${c}_{min} = - 78.487 ,$ and
- ${c}_{max} = - 98.487 .$

2. The pneumatic tyre (10) according to claim 1, wherein the tyre's (10) Free-state Beads Width (FsBW), i.e. the distance between the outer surfaces of the beads (1) of the tyre (10) when the tyre (10) is in a free state not mounted on a rim, is within the range defined by the following Formula V:
- ${RimW}_{ETRTO} - 12.0 mm \leq FsBW \leq {RimW}_{ETRTO} + 4.0 mm$ (Formula v)

3. The pneumatic tyre (10) according to claim 1 or 2, wherein the tyre (10) is configured to be mounted on a rim (30) having a nominal diameter in the range of 13 to 24 inches.

4. The pneumatic tyre (10) according to claim 3, wherein the tyre (10) is configured to be mounted on a rim (30) having a nominal diameter in the range of 15 to 22 inches.

5. The pneumatic tyre (10) according to any of the preceding claims, wherein the tyre (10) is a winter tyre or an all-season tyre.

6. A mould (40) for manufacturing a pneumatic radial tyre (10) by vulcanizing and forming in the mould (40), wherein the mould's (40) inner dimensions tread area width (TW_{mould}), maximum diameter (MD_{mould}), maximum section width (MSW_{mould}), and maximum section width diameter (MSWD-_{mould}) are within the ranges defined by the following Formulas VI-X:
- ${TW}_{mould} = \left(1.075-0.005\times AR\right) \times {s}^{k}$ (Formula vi)
- ${D}_{max in service} - 4.0 mm \leq {MD}_{mould} \leq {D}_{max in service} + 10.0 mm$ (Formula vii)
- $\begin{matrix}d \times {\left({MD}_{mould}-RimD\right)}^{2} + e \times \left({MD}_{mould}-RimD\right) + {f}_{min} \leq \\ {MSWD}_{mould} - CRW \leq d \times {\left({MD}_{mould}-RimD\right)}^{2} + e \times \left(\begin{matrix}{MD}_{mould} - \\ RimD\end{matrix}\right) + {f}_{max}\end{matrix}$ (Formula viii)
- $1.9207 \leq \frac{{MD}_{mould} - RimD}{{MSWD}_{mould} - RimD} \leq 2.0802$ (Formula ix)
where:
- *AR* is the aspect ratio of the tyre,
- s is the design section width of the tyre size in question defined in the ETRTO standard for passenger car tyres for a tyre mounted on a measuring rim specified for the tyre size in question,
- $0.9924 \leq k \leq 1.0020 ,$
- D_{max in service} is the maximum diameter in service specified for the tyre size in question in said ETRTO standard without an increase allowed for M+S tyres,
- *CRW* is the width of the curing rim of the mould,
- *RimD* is the rim diameter specified in said ETRTO standard for the tyre size in question,
- $d = - 1.1 \times {10}^{- 3} ,$
- $e = 0.7537 ,$
- ${f}_{min} = - 80.844 ,$ and
- ${f}_{max} = - 65.844 .$

7. The mould (40) according to claim 6, wherein the curing rim width (CRW) of the mould (40) is within the range defined by the following Formula X:
- $RimW - 14.7 mm \leq CRW \leq RimW - 10.7 mm$ (Formula x)
where:
- *RimW* is the rim width specified for the tyre size in question in said ETRTO standard.

8. A method of manufacturing a pneumatic radial tyre (10) using a mould (40) according to claim 6 or 7, the method comprising the steps of
- assembling tyre components to form a preformed tyre,
- vulcanizing the preformed tyre (10) in a curing press comprising said mould (40).
